# EUROPÄISCHE PATENTSCHRIFT

(11) **EP 2 198 756 B1**
(45) Veröffentlichungstag und Bekanntmachung des Hinweises auf die Patenterteilung: **30.11.2011**
(21) Anmeldenummer: 09177427.3
(22) Anmeldetag: 30.11.2009
(51) Int. Cl.: A47J 31/44

(54) **Getränkeautomat**
Automatic beverage machine
Distributeur automatique de boissons

(30) Priorität: 19.12.2008 DE 202008016845 U
(43) Veröffentlichungstag der Anmeldung: 23.06.2010
(73) Patentinhaber: BSH Bosch und Siemens Hausgeräte GmbH, 81739 München (DE)
(72) Erfinder: Miklavc, Peter, 3305, Vransko (SI); Storman, Igor, 3311, Sempeter v Sav. dol (SI); Ursej, Matjaz, 2382, Mislinja (SI); Zibret, Igor, 3327, Smartno ob Paki (SI)

(56) Entgegenhaltungen:
- DE-U- 1 984 739
- DE-U1- 20 017 859
- DE-U1- 20 220 056

## Beschreibung

Die vorliegende Erfindung betrifft einen Getränkeautomaten, insbesondere einen Kaffeeautomaten, mit einem höhenverstellbaren Getränkeauslauf gemäß dem Oberbegriff des Anspruchs 1.

Ein derartiger Getränkeautomat mit einem höhenverstellbaren Auslauf ist beispielsweise aus der DE 20 2004 020 916 U1 bekannt, ebenso wie aus der DE 200 17 859 U1. Beiden Getränkeautomaten ist dabei gemein, einen Getränkeauslauf bezüglich seiner Höhe einfach an unterschiedlich große Getränkegefäße, wie beispielsweise Gläser oder Tassen, anpassen zu können. Die Höhenverstellung des Getränkeauslaufs ist dabei auch von Vorteil, wenn es darum geht, Verunreinigungen im Befüllbereich des Getränkebehälters zu vermeiden, wie diese beispielsweise bei einem zu hoch montierten statischen Getränkeauslauf beim Befüllen einer kleinen Espressotasse auftreten können. Da der Getränkeauslauf üblicherweise ein Eigengewicht aufweist, muss ein Haltemechanismus so stark sein, dass der Getränkeauslauf nicht von alleine nach unten rutschen kann. Hierfür können beispielsweise mechanische Rastvorrichtungen verwendet werden, die ein eigenmächtiges Herabrutschen vermeiden. Derartige mechanische Rastvorrichtungen sind jedoch konstruktiv aufwändig und erzeugen beim Verstellen des höhenverstellbaren Getränkeauslaufs ein unangenehmes Geräusch.

Weitere Getränkeautomaten mit einem höhenverstellbaren Getränkeauslauf sind beispielsweise aus der DE 200 17 859 U1, aus der DE 10 2004 004 835 A1 sowie aus der DE 20 2004 020 982 U1 bekannt.

Nachteilig bei den bekannten Getränkeautomaten mit höhenverstellbarem Getränkeauslauf ist dabei, dass diese beispielsweise allein aufgrund unterschiedlicher Temperaturen unterschiedliche Verstellwiderstände beim Verstellen des höhenverstellbaren Getränkeauslaufs aufweisen, so dass es vorkommen kann, dass zu einem Verstellen desselben, einmal eine vergleichsweise geringe und das andere Mal eine vergleichsweise große Kraft aufgewendet werden muss. Da dies eine Qualitätssicherung äußerst schwierig macht, muss bislang in diesem Bereich ein relativ hoher Qualitätssicherungsaufwand betrieben werden.

Die vorliegende Erfindung beschäftigt sich mit dem Problem, für einen Getränkeautomaten der gattungsgemäßen Art, eine verbesserte oder eine alternative Ausführungsform anzugeben, mit welcher ein möglichst gleichmäßiger Verstellwiderstand beim Höhenverstellen eines höhenverstellbaren Getränkeauslaufs erreicht werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem höhenverstellbaren Getränkeauslauf an einem Getränkeautomaten ein federbeaufschlagtes Gleitelement einzusetzen, wobei die durch die Feder hervorgerufene Federkraft das Gleitelement derart beaufschlagt, dass ein gleichbleibender Gleit-Nerschiebewiderstand beim Höhenverstellen des Getränkeauslaufs erreicht wird. Hierzu ist am Getränkeautomat ein als Stange oder als Rohr ausgebildetes Führungselement vorgesehen, auf welchem koaxial ein Buchsenelement über ein dazwischen angeordnetes Gleitelement gleitet, und an welchem der höhenverstellbare Getränkeauslauf über das Buchsenelement geführt ist, wobei wiederum an diesem Buchsenelement das federbeaufschlagte Gleitelement angeordnet ist. Letzteres ist zumindest bereichsweise von der Feder gegen das Führungselement vorgespannt und erzeugt aufgrund der kontinuierlichen Vorspannung durch die Feder einen vorzugsweise stets gleichen Gleit-Nerschiebewiderstand beim Höhenverstellen des Getränkeauslaufs. Durch das erfindungsgemäße federbeaufschlagte Gleitelement ist es somit möglich, den Gleit-Nerschiebewiderstand zum Höhenverstellen des Getränkeauslaufs exakt und vor allem dauerhaft einzustellen, wobei der einmal eingestellte Gleit-Nerschiebewiderstand nahezu unabhängig von äußeren Widerständen, insbesondere beispielsweise von einer Temperatur- oder Feuchtigkeitsbelastung ist, so dass dieser voreingestellte Gleit-/Verschiebewiderstand vorzugsweise während der gesamten Lebensdauer des Getränkeautomatens erhalten bleibt. Vor allem ist es hierdurch möglich, eine Vielzahl von Getränkeautomaten herzustellen, bei welchen mit einfachsten Hilfsmitteln der jeweilige Gleit-Nerschiebewiderstand zum Höhenverstellen des jeweiligen Getränkeauslaufs gleich ist. Hierdurch lässt sich auch ein qualitativ besonders hochwertiges Produkt erzeugen, da der Kunde beim Höhenverstellen unterschiedlicher Getränkeausläufe an unterschiedlichen Getränkeautomaten jeweils einen vorzugsweise identischen Gleit-/Verschiebewiderstand überwinden muss.

Bei einer vorteilhaften Weiterbildung der erfindungsgemäßen Lösung, ist das Gleitelement ringförmig ausgebildet und weist zumindest zwei Axialschenkel auf, an deren Enden jeweils ein nach außen gerichteter Rasthaken angeordnet ist, die in jeweils eine zugehörige und sich in Umfangsrichtung erstreckende Rastöffnung am Buchsenelement eingreifen und dadurch das Gleitelement am Buchsenelement fixieren. Gleichzeitig ist die Feder zur Beaufschlagung des Gleitelementes U-förmig ausgebildet und verspannt mit ihren Federschenkeln die Axialschenkel des Gleitelementes im Bereich der Rastöffnungen gegen das Führungselement. Sowohl das Gleitelement als auch die U-förmige Feder können dabei äußerst kostengünstig gefertigt und montiert werden, wodurch die Einstellung eines konstanten Gleit-/Verschiebewiderstandes mit sowohl konstruktiv einfachen als auch kostengünstigen Mitteln möglich ist. Zur Montage wird zunächst das ringförmige Gleitelement mit seinen Axialschenkeln in das Buchsenelement gesteckt bis die Rasthaken der Axialschenkel mit den am Buchsenelement angeordneten Rastöffnungen verrasten. Anschließend wird das Buchsenelement zusammen mit dem Gleitelement auf das als Stange oder als Rohr ausgebildete Führungselement aufgeschoben. Zuletzt wird die U-förmige Feder quer zur Längsachse des Buchsenelementes auf dieses aufgeschoben und zwar derart, dass die Federschenkel die Axialschenkel des Gleitelementes im Bereich der Rastöffnungen gegen das Führungselement verspannen. Die Feder muss demnach im Bereich der Rastöffnungen auf das Buchsenelement aufgeschoben werden. Eine entsprechende Demontage erfolgt dabei in umgekehrter Reihenfolge. Die Herstellung der U-förmigen Feder, welche selbstverständlich auch C-förmig ausgebildet sein kann, ist dabei trotz einheitlicher und hoher Qualitätsstandards kostengünstig möglich, wobei die derartig hergestellte Feder eine vorzugsweise über die gesamte Lebensdauer gleichbleibende Federkraft aufweist, mit welcher die Axialschenkel des Gleitelementes gegen das Führungselement vorgespannt und damit der Gleit-Nerschiebewiderstand eingestellt wird.

Bei einer vorteilhaften Weiterbildung der erfindungsgemäßen Lösung, ist das Gleitelement aus Kunststoff und insbesondere als Kunststoffspritzgussteil, ausgebildet. Die Ausbildung des Gleitelementes aus Kunststoff und insbesondere als Kunststoffspritzgussteil bietet dabei den großen Vorteil, dass durch eine entsprechende Auswahl des verwendeten Kunststoffes die Eigenschaften des Gleitelementes nahezu frei wählbar sind, ebenso wie eine Farbgebung desselben. Darüber hinaus sind bei einem als Kunststoffspritzgussteil ausgebildeten Gleitelement lediglich äußerst geringe Stückkosten zu erwarten, wodurch - beispielsweise im Vergleich zu anderen aufwändigen Konstruktionen - der Gleit-Nerschiebewiderstand äußerst kostengünstig auf einem konstanten Niveau gehalten werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen höhenverstellbaren Getränkeauslauf mit der erfindungsgemäßen Lösung zur Erzeugung eines konstanten Gleit-/Schiebewiderstandes,
- Fig. 2: eine Ansicht auf ein erfindungsgemäßes Gleitelement.

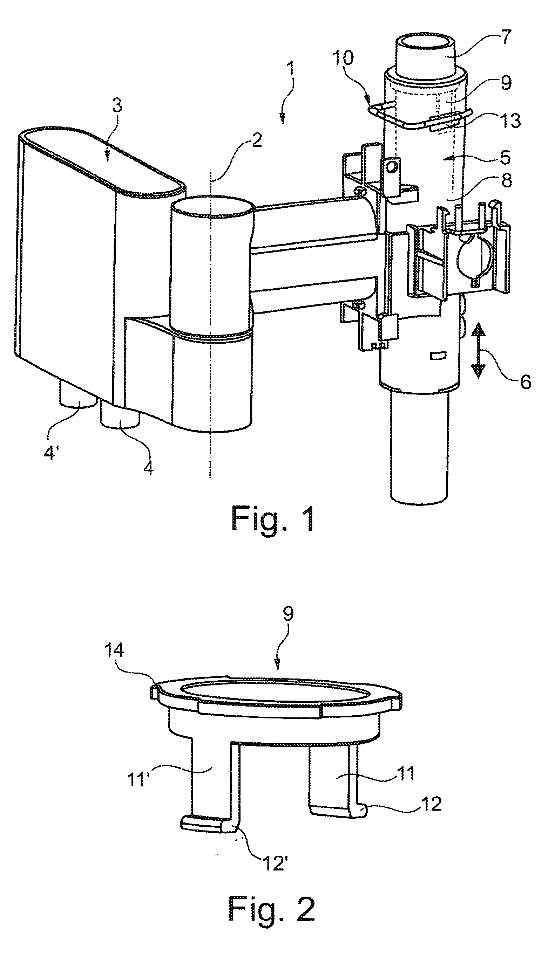

Entsprechend der Fig. 1, weist ein höhenverstellbarer Getränkeauslauf 1 einen um eine Hochachse 2 schwenkbaren Auslaufarm 3 mit zwei Auslaufstellen 4 und 4' auf. Der Auslaufarm 3 ist dabei über die Hochachse 2 schwenkbar an einem Komponententräger 5 gelagert, welcher entlang dem Doppelpfeil 6 höhenverstellbar an einem nicht gezeigten Getränkeautomaten, insbesondere an einem Kaffeevollautomaten, gelagert ist. An diesem Getränkeautomaten ist dabei ortsfest ein Führungselement 7 vorgesehen, welches beispielsweise als Stange oder als Rohr ausgebildet ist und auf welchem der höhenverstellbare Getränkeauslauf 1, respektive der Komponententräger 5 mit dem daran schwenkbar gelagerten Auslaufarm 3 über ein Buchsenelement 8 geführt ist. Das Buchsenelement 8 ist dabei Bestandteil des Komponententrägers 5.

Erfindungsgemäß ist am Buchsenelement 8 ein federbeaufschlagtes Gleitelement 9 (vgl. insbesondere Fig. 2) angeordnet, welches zumindest bereichsweise von einer Feder 10 gegen das Führungselement 7 vorgespannt ist und dadurch einen vorzugsweise konstanten Gleit-/Verschiebewiderstand zwischen dem Buchsenelement 8 und damit dem Getränkeauslauf 1 und dem Führungselement 7 erzeugt. Gemäß der Fig. 1 ist dabei das Buchsenelement 8 des Komponententrägers 5 im Bereich des Gleitelementes 9 transparent gezeichnet, um die Lage des Gleitelementes 9 im Buchsenelement 8 besser darstellen zu können.

Betrachtet man die Fig. 2, so kann man erkennen, dass das Gleitelement 9 ringförmig ausgebildet ist und zumindest zwei sich in Axialrichtung erstreckende Axialschenkel 11 und 11' aufweist, an deren freien Enden jeweils ein nach außen gerichteter Rasthaken 12, 12' angeordnet ist. Diese greifen in jeweils eine zugehörige, sich in Umfangsrichtung erstreckende, Rastöffnung 13 am Buchsenelement 8 ein und fixieren dadurch das Gleitelement 9 am Buchsenelement 8.

Die Feder 10 ist vorzugsweise U-förmig oder C-förmig ausgebildet und spannt mit ihren Federschenkeln die Axialschenkel 12, 12' des Gleitelementes 9 im Bereich der Rastöffnungen 13 gegen das Führungselement 7 vor, wodurch ein stets gleicher Gleit-Nerschiebewiderstand erzeugt wird. Das Gleitelement 9 ist dabei vorzugsweise aus Kunststoff, insbesondere als Kunststoffspritzgussteil, hergestellt und ermöglicht dadurch eine einerseits kostengünstige Herstellung und andererseits eine nahezu frei wählbare Beeinflussung der Kunststoffeigenschaften. Im Vergleich dazu sind das Führungselement 7 und das Buchsenelement 8 vorzugsweise aus Metall ausgebildet.

Betrachtet man die Fig. 2, so kann man erkennen, dass das Gleitelement 9 einen Kragen 14 aufweist, über welchen es an einem Längsende des Buchsenelementes 8 anliegt. Der Kragen 14 bildet demgemäß einen Anschlag beim längsseitigen Einschieben des Gleitelementes 9 in das Buchsenelement 8.

Mit dem erfindungsgemäßen Gleitelement 9 ist es möglich, den Gleit-Nerschiebewiderstand, welcher beim nach oben oder nach unten Verschieben des höhenverstellbaren Getränkeauslaufs 1 auftreten soll, konstant zu halten, und dies mit konstruktiv äußerst einfachen Mitteln, die darüber hinaus kostengünstig herstellbar sind. Von besonderem Vorteil ist dabei, dass der durch die Feder 10 und das Gleitelement 9 voreingestellte Gleit-/Verschiebewiderstand unabhängig von äußerlichen Temperaturen oder beispielsweise Feuchtigkeitseinflüssen ist, so dass der konstante Gleit-Nerschiebewiderstand vorzugsweise während der gesamten Betriebs-/Lebensdauer des Getränkeautomatens gewährleistet ist und insbesondere nicht nachjustiert werden muss.

### Bezugszeichenliste

- 1: Getränkeauslauf
- 2: Hochachse
- 3: Auslaufarm
- 4: Auslaufstelle
- 5: Komponententräger
- 6: Verschieberichtung
- 7: Führungselement
- 8: Buchsenelement
- 9: Gleitelement
- 10: Feder
- 11: Axialschenkel
- 12: Rasthaken
- 13: Rastöffnung
- 14: Kragen

## Patentansprüche

1. Getränkeautomat, insbesondere ein Kaffeevollautomat, mit einem höhenverstellbaren Getränkeauslauf (1), wobei am Getränkeautomat ein als Stange oder als Rohr ausgebildetes Führungselement (7) vorgesehen ist, auf welchem koaxial ein Buchsenelement (8) gleitet, und an welchem der höhenversellbare Getränkeauslauf (1) über das Buchsenelement (8) geführt ist, **dadurch gekennzeichnet,daß** am Buchsenelement (8) ein federbeaufschlagtes Gleitelement (9) angeordnet ist, welches zweischen Buchsenelement (8) und Führungselement (7) angeordnet ist, und zumindest bereichsweise von einer Feder (10) gegen das Führungselement (7) vorgespannt ist und **dadurch** einen vorzugsweise konstanten Gleit-Nerschiebewiderstand zwischen dem Buchsenelement (7) und damit dem Getränkeauslauf (1) und dem Führungselement (7) erzeugt.

2. Getränkeautomat nach Anspruch 1, **dadurch gekennzeichnet, dass** das Gleitelement (9) ringförmig ausgebildet ist und zumindest zwei Axialschenkel (11,11') aufweist, an deren freien Enden jeweils ein nach außen gerichteter Rasthaken (12,12') angeordnet ist, der in jeweils eine zugehörige, sich in Umfangsrichtung erstreckende, Rastöffnung (13) am Buchsenelement (8) eingreift und **dadurch** das Gleitelement (9) am Buchsenelement (8) fixieren.

3. Getränkeautomat nach Anspruch 2, **dadurch gekennzeichnet, dass** die Feder (10) U-förmig oder C-förmig ausgebildet ist und mit ihren Federschenkeln die Axialschenkel (11,11') des Gleitelementes (9) im Bereich der Rastöffnungen (13) gegen das Führungselement (7) vorspannt.

4. Getränkeautomat nach einem der Ansprüche 1 bis 3, **dadurch gekennzeichnet, dass** das Gleitelement (9) aus Kunststoff ausgebildet ist.

5. Getränkeautomat nach einem der Ansprüche 1 bis 4, **dadurch gekennzeichnet, dass** das Führungselement (7) und das Buchsenelement (8) aus Metall ausgebildet sind.

6. Getränkeautomat nach einem der Ansprüche 1 bis 5, **dadurch gekennzeichnet, dass** das Gleitelement (9) einen Kragen (14) aufweist, über welchen es an einem Längsende des Buchsenelementes (8) anliegt.

7. Getränkeautomat nach einem der Ansprüche 2 bis 6, **dadurch gekennzeichnet, dass** die Axialschenkel (11,11') des Gleitelementes (9) von innen am Buchsenelement (8) anliegen.

## Claims

1. Beverage machine, particularly coffee machine, with a beverage outlet (1) adjustable in height, wherein a guide element (7) constructed as a rod or tube, on which guide element a bush element (8) coaxially slides and at which guide element the beverage outlet (1) adjustable in height is guided by way of the bush element (8), is provided at the beverage machine, **characterised in that** arranged at the bush element (8) is a spring-loaded slide element (9) which is arranged between bush element (8) and guide element (7) and is biased at least in a region by a spring (10) against the guide element (7) and thereby produces a preferably constant slide/displacement resistance between the bush element (7) and thus the beverage outlet (1) and the guide element (7).

2. Beverage machine according to claim 1, **characterised in that** the slide element (9) is of annular construction and has at least two axial limbs (11, 11'), at each of the free ends of which is arranged a respective outwardly directed detent hook (12, 12') which engages in a respective associated detent opening (13) - which extends in circumferential direction - at the bush element (8) and thereby fixes the slide element (9) to the bush element.

3. Beverage machine according to claim 2, **characterised in that** the spring (10) is of U-shaped or C-shaped construction and by the spring limbs thereof biases the axial limbs (11, 11') of the slide element (9) in the region of the detent openings (13) against the guide element (7).

4. Beverage machine according to any one of claims 1 to 3, **characterised in that** the slide element (9) is constructed from plastics material.

5. Beverage machine according to any one of claims 1 to 4, **characterised in that** the guide element (7) and the bush element (8) are constructed from metal.

6. Beverage machine according to any one of claims 1 to 5, **characterised in that** the slide element (9) has a collar (14) by way of which it bears against a longitudinal end of the bush element (8).

7. Beverage machine according to any one of claims 2 to 6, **characterised in that** the axial limbs (11, 11') of the slide element (9) bear from the inside against the bush element (8).

## Revendications

1. Distributeur automatique de boissons, en particulier un distributeur automatique de café, présentant une sortie de boisson (1) réglable en hauteur, un élément de guidage (7) conçu comme barre ou comme tuyau étant prévu sur le distributeur automatique de boissons, élément sur lequel un élément de manchon (8) glisse dans le sens coaxial, et sur lequel la sortie de boisson (1) réglable en hauteur est guidée au moyen de l'élément de manchon (8), **caractérisé en ce qu'**un élément de glissement (9) sollicité par ressort est disposé sur l'élément de manchon (8), lequel élément de glissement (9) est disposé entre l'élément de manchon (8) et l'élément de guidage (7) et est pré-tendu au moins par endroits par un ressort (10) contre l'élément de guidage (7) et génère ainsi une résistance au glissement/déplacement de préférence constante entre l'élément de manchon (7) et donc la sortie de boisson (1) et l'élément de guidage (7).

2. Distributeur automatique de boissons selon la revendication 1, **caractérisé en ce que** l'élément de glissement (9) est conçu avec une forme annulaire et présente au moins deux branches axiales (11, 11'), sur chacune des extrémités libres desquelles est disposé respectivement un crochet d'encliquetage (12, 12') dirigé vers l'extérieur, lequel s'engage dans respectivement une ouverture d'encliquetage (13) spécifique, s'étendant dans le sens périphérique, sur l'élément de manchon (8) et fixe ainsi l'élément de glissement (9) sur l'élément de manchon (8).

3. Distributeur automatique de boissons selon la revendication 2, **caractérisé en ce que** le ressort (10) est conçu en forme de U ou de C et précontraint avec ses branches de ressort les branches axiales (11, 11') de l'élément de glissement (9) dans la zone des ouvertures d'encliquetage (13) contre l'élément de guidage (7).

4. Distributeur automatique de boissons selon l'une quelconque des revendications 1 à 3, **caractérisé en ce que** l'élément de glissement (9) est conçu en matière synthétique.

5. Distributeur automatique de boissons selon l'une des revendications 1 à 4, **caractérisé en ce que** l'élément de guidage (7) et l'élément de manchon (8) sont conçus en métal.

6. Distributeur automatique de boissons selon l'une des revendications 1 à 5, **caractérisé en ce que** l'élément de glissement (9) présente une collerette (14), par laquelle il s'applique sur une extrémité longitudinale de l'élément de manchon (8).

7. Distributeur automatique de boissons selon l'une des revendications 2 à 6, **caractérisé en ce que** les branches axiales (11, 11') de l'élément de glissement (9) s'appliquent par l'intérieur sur l'élément de manchon (8).
